# EUROPÄISCHE PATENTSCHRIFT

(11) **EP 1 726 478 B1**
(45) Veröffentlichungstag und Bekanntmachung des Hinweises auf die Patenterteilung: **11.07.2018**
(21) Anmeldenummer: 06010601.0
(22) Anmeldetag: 23.05.2006
(51) Int. Cl.: B60P 3/20

(54) **Trennwand für einen Fahrzeugaufbau**
Dividing wall for the body structure of a vehicle
Cloison pour véhicule

(30) Priorität: 25.05.2005 DE 102005024036
(43) Veröffentlichungstag der Anmeldung: 29.11.2006
(73) Patentinhaber: Fahrzeugwerk Bernard Krone GmbH, 48480 Spelle (DE)
(72) Erfinder: Krone, Bernard, Dr., 48480 Spelle (DE)
(74) Vertreter: Pott, Ulrich

(56) Entgegenhaltungen:
- EP-A- 0 364 197
- EP-A- 1 002 694
- EP-A- 1 366 953
- DE-U1- 8 519 485
- FR-A- 2 635 737
- GB-A- 2 226 993
- US-A- 2 677 246
- US-A- 2 725 827

## Beschreibung

Die Erfindung bezieht sich auf einen Fahrzeugaufbau mit einem kastenförmigen Laderaum, insbesondere mit einem zumindest bereichsweise kühlbaren Laderaum in einer Ausgestaltung gemäß dem Oberbegriff des Patentanspruchs 1.

Ein Fahrzeugaufbau der vorgenannten Art ist beispielsweise aus der DE 198 08 841 C2 bekannt. Dabei ist die Trennwand jeweils mit Dichtungsprofilen versehen, die in einer besonders in der Trennwand vorgesehenen Ausnehmung angeordnet sind, und die sich derart aus dieser Ausnehmung nach außen drücken lassen, daß über diese Dichtelemente die Trennwand mit der Innenwandung des Fahrzeugaufbaus zu verspannen ist. Dazu sind entsprechende Schubstangenanordnung u.dgl. erforderlich. Damit die Dichtelemente gleichzeitig die Feststeller der Trennwand bilden, sind die Dichtflächen außerordentlich hohen Beanspruchungen ausgesetzt. Das führt zu einem erhöhten Verschleiß und hat häufig unbemerkte Leckagestellen zur Folge.

Aus der US-A-2 677 246 ist ein Fahrzeugaufbau der eingangs genannten Art bekannt, bei der die verschiebliche Trennwand über hin und her bewegliche, ein bolzenförmiges Ende aufweisende, in entsprechende Lochausnehmungen in der Innenwandung des Fahrzeugsaufbaus einzuführende Feststeller zu verbinden ist. Beidseits an den Wandungen der Trennwand sind Dichtelemente vorgesehen, die über Scharniere bei positionierter Trennwand in ihre Dichtposition einzuklappen und in dieser Dichtposition über Haltelemente zu fixieren sind. Die Positionierung der Trennwand ist daher auf das in der Innenwandung vorgesehene Lochmuster beschränkt. Aus der FR-A-2 635 737 ist ein Fahrzeugaufbau mit einer vorzusehenden Trennwand bekannt, die über bewegliche Feststeller mit dem Boden des Fahrzeugaufbaus zu verspannen ist. Oberseitig trägt die Trennwand ein aufschraubbares Fixiergegenstück, so daß die Verbindung der Trennwand mit dem Fahrzeugboden mit einem unterseitig bewegbaren Feststeller erfolgt. Aus der gattungsgemäßen EP-A-1 002 694 ist ein Kühlfahrzeug mit einem kofferartigen Aufbau bekannt, der durch mehrere Trennwände in einzelne Kühlkammern unterteilt werden kann. Um Kammern zu schaffen mit einer beliebig wählbaren Grundfläche ist die Trennwand quer zur Fahrzeuglängsrichtung zu verschwenken, wobei jede Trennwand aus wenigstens zwei in Längsrichtung aneinandergereihten Einzelwänden im Bereich der Ecken verriegelt werden können. Es ist Aufgabe der vorliegenden Erfindung, einen Fahrzeugaufbau der eingangs genannten Art zu schaffen, bei dem die Trennwand sicher zu arretieren ist und darüber hinaus Dichtelemente weniger beansprucht sind.

Zur Lösung dieser Aufgabe zeichnet sich der Fahrzeugaufbau der eingangs genannten Art durch die im Anspruch 1 angegebenen Merkmale aus. Hinsichtlich wesentlicher weiterer Ausgestaltungen wird auf die Ansprüche 2 bis 4 verwiesen. Bei dem Fahrzeugaufbau nach der Erfindung ist die Trennwand allein über den Feststeller mit der Innenwandung des Fahrzeugaufbaus zu verspannen. Die Dichtelemente haben allein Dichtungsaufgaben zu übernehmen. Die Trennwand hat zu ihren beiden aufrecht stehenden Längsseitenkanten die Feststeller, wobei die jeweiligen Feststeller sich nur über einen relativ geringen Bereich der Höhe der Trennwand zu erstrecken haben. Hierbei reicht es aus, wenn jeweils auf der linken und rechten Seite der Trennwand der als Bremsklotz ausgebildete Feststeller in einem bodennahen Bereich des Fahrzeugaufbaus vorgesehen ist und über diesen Bremsklotz die Trennwand mit der Innenwandung verspannt wird. Irgendwelche Ausnehmungen sind in der Innenwandung dabei nicht erforderlich.

Die Trennwand ist dabei so ausgebildet, daß an zwei Seiten der Trennwand jeweils ein ortsfest angeordneter Feststeller in Gestalt des Bremsklotzes vorgesehen ist, den jeweils eine Dichtlippen aufweisende Dichtung begrenzt, so daß im montierten Zustand der Wand die entsprechenden Dichtlippen sich links und rechts des Feststellers erstrecken und über den Feststeller hinaus ein Spaltmaß zwischen der Innenwandung des Ladeaufbaus und der Trennwand abdichten. Auf der anderen Seite der Trennwand, also dem zuvor beschriebenen Feststeller gegenüberliegend, ist der weitere Feststeller beweglich ausgebildet, und kann mittels eines gemeinsamen Hebels gemeinsam mit dem zuerst beschriebenen Feststeller in die Arretierungsstellung gebracht werden. Durch die an den beiden Seiten der Trennwand vorgesehene Feststeller, die mittels des gemeinsamen Hebels und dem Schubgestänge betätigt werden, ist in vorteilhafter Weise die Trennwand zentrierbar. Hierdurch werden die ansonsten ungleichmäßig belastete Dichtelemente gleichmäßig beansprucht.

Weitere vorteilhafte Ausgestaltungen der Erfindung ergeben sich aus weiteren Unteransprüchen, der nachfolgenden Beschreibung und der Zeichnung. In der Zeichnung zeigen:

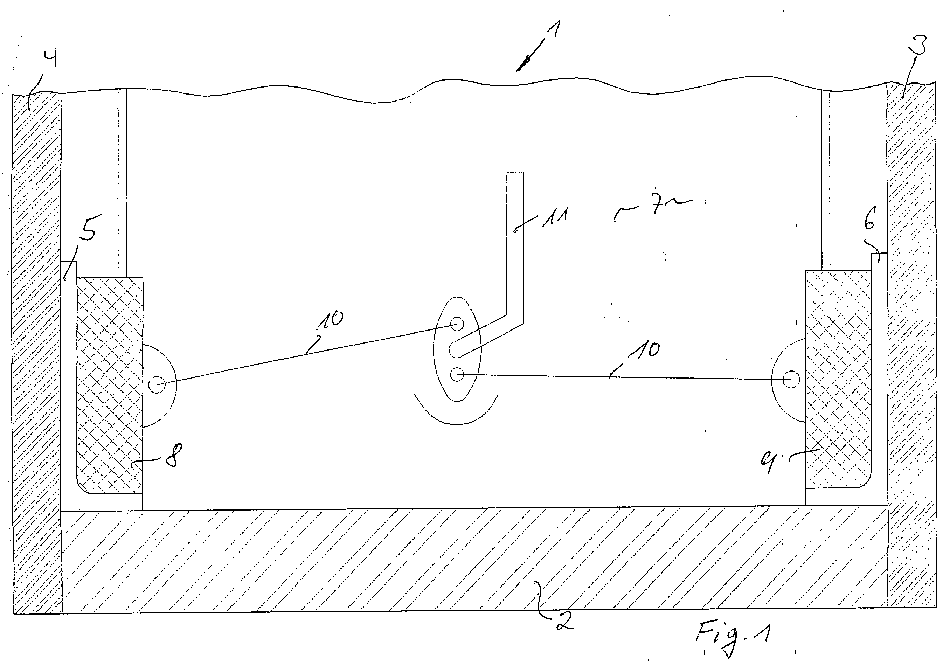

- Fig. 1: eine schematische Ansicht von vorn auf eine Trennwand, die innerhalb eines Fahrzeugaufbaus angeordnet ist als erstes Ausführungsbeispiel;
- Fig. 2: ausschnittsweise eine Querschnittsdarstellung des Ausführungsbeispiels nach Fig. 1;

In der Zeichnung sind grundsätzlich gleichwirkende Teile mit übereinstimmenden Bezugsziffern versehen. Allgemein mit 1 ist ein Fahrzeugaufbau beziffert, der einen Aufbauboden 2, sowie Seitenwände 3 und 4 hat, sowie im Bereich an die Seitenwände 3 und 4 angrenzend jeweils Scheuerleisten 5 und 6. Zwecks Abtrennung des Laderaumes in Ladebereiche ist eine allgemein mit 7 bezifferte Trennwand vorgesehen, zu deren Arretierung im bodennahen Bereich zwei Bremsklötze 8 und 9 als Feststeller vorgesehen sind. Diese Bremsklötze 8 und 9 sind über Schubstangen 10 zu bewegen, also in Richtung der Seitenwände 3 und 4 zu bewegen und entsprechend zurück, um die Trennwand mit der Innenwandung der Seitenwände 3 und 4 zu verspannen bzw. um die Trennwand im Laderaum zu arretieren. Die Schubstangen 10 sind über einen Hebel 11 zu betätigen.

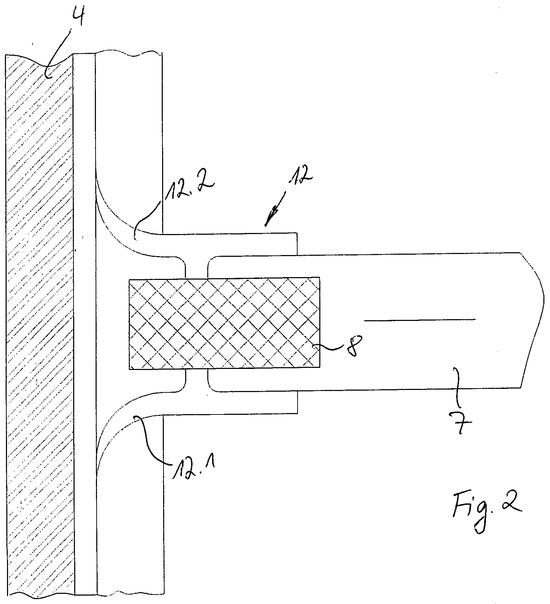

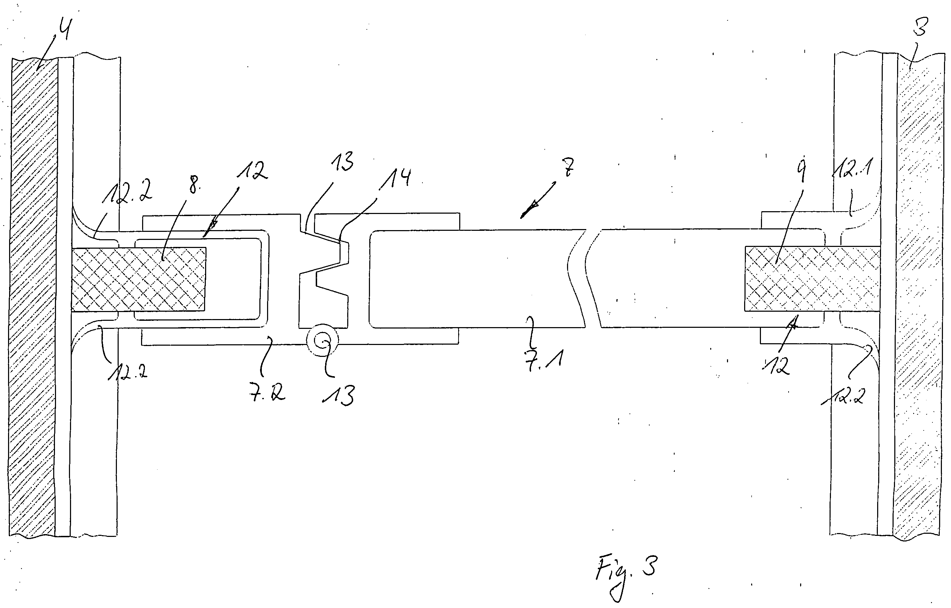

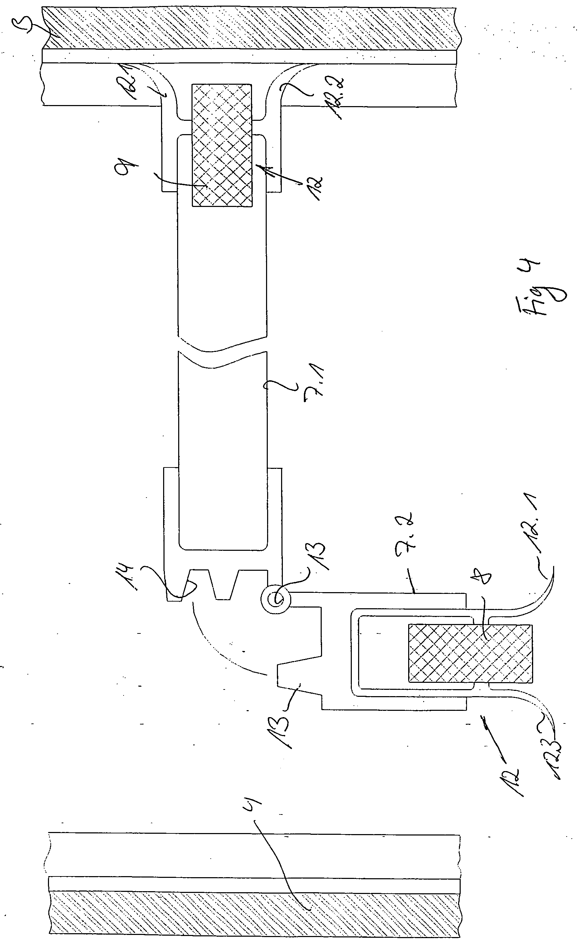

Wie näher aus der Darstellung nach Fig. 2 hervorgeht, ist jeder Bremsklotz 8 von einem allgemein mit 12 bezifferten Dichtelement begrenzt, das Dichtlippen 12.1 und 12.2 aufweist, die sich an die Innenwandung der Seitenwand 4 anlegen, so daß die durch die Trennwand 7 abgetrennten Bereiche des Laderaumes voneinander abgedichtet sind. Der Feststeller bzw. Bremsklotz 8 bzw. 9 übernimmt jedoch die volle Verspannung der Trennwand mit den Seitenwänden 3 und 4, so daß die Dichtung lediglich Dichtungsaufnahmen zu übernehmen hat. Durch die Feststeller 8 bzw. 9 ist die Trennwand 7 automatisch zu zentrieren.

## Patentansprüche

1. Fahrzeugaufbau (1) mit einem kastenförmigen Laderaum, insbesondere einem zumindest bereichsweise kühlbaren Laderaum, mit zumindest einer verstellbaren Trennwand (7), die längsverschieblich innerhalb des Laderaumes über eine Verriegelungsvorrichtung an Anbauseitenwänden unter Zwischenlage von Dichtelementen (12) arretierbar ist, wobei sich Dichtelemente (12) entlang von Seitenkanten der Trennwand (7) und/oder von unteren und oberen Stirnkanten der Trennwand (7) erstrecken und die Trennwand (7) über zumindest einen sich bereichsweise entlang der Trennwand erstreckenden sowie von Dichtelementen (12) begrenzten Feststeller (8,9) mit Wandungen (3,4) des Fahrzeugaufbaus (1) verspannbar ist, **dadurch gekennzeichnet, dass** an gegenüberliegenden Seitenkanten der Trennwand 7 als Bremsklötze ausgebildete Feststeller (8, 9) vorgesehen sind, wobei zumindest einer der Bremsklötze in Trennwandlängsrichtung hin- und her beweglich ist und die Trennwand über die Bremsklötze als Feststeller (8, 9) zentrierbar ist, wobei zumindest einer der Feststeller (8, 9) in die Trennwand (8) hinein und so weit aus dieser heraus bewegbar ist, dass er ein Spaltmaß zwischen der Wandung (3, 4) des Fahrzeugaufbaus und den Seitenstirnkanten der Trennwand an die Seitenwandung des Fahrzeugaufbaus überbrückt und der aus der Trennwand (7) herausbewegte Bremsklotz seitlich von flexiblen Dichtelementen (12.1, 12.2) begrenzt ist.

2. Fahrzeugaufbau nach Anspruch 1, **dadurch gekennzeichnet, dass** zumindest einer der Bremsklötze am Feststeller (8, 9) jeweils über eine an einem Hebel (11) angreifende Flugstange (10) in Richtung jeweils einer Seitenwand (3, 4) und zurück zu bewegen ist.

3. Fahrzeugaufbau nach Anspruch 1 oder 2, **dadurch gekennzeichnet, dass** die Dichtelemente (12.1, 12.2) als Lippendichtelemente ausgebildet sind und eine größere Längserstreckung als das Spaltmaß zwischen Trennwand (7) und Wandung (3, 4) des Fahrzeugaufbaus (1) aufweisen.

4. Fahrzeugaufbau nach einem der Ansprüche 1 bis 3, **dadurch gekennzeichnet, dass** an jedem Seitenbereich der Trennwand (7) ein Feststeller vorgesehen ist.

## Claims

1. A vehicle body (1) comprising a box-shaped cargo space, in particular a cargo space that can be chilled at least in regions, which comprises at least one adjustable partition (7) which can be longitudinally movably locked, inside the cargo space, by means of a locking device to add-on side walls by sealing elements (12) being positioned therebetween, sealing elements (12) extending from side edges of the partition (7) and/or from lower and upper end edges of the partition (7) and it being possible for the partition (7) to be braced by at least one locking means (8, 9), which extends along the partition and is delimited by sealing elements (12), to walls (3, 4) of the vehicle body (1), **characterized in that** locking means (8, 9) are provided on opposite side edges of the partition (7) in the form of brake blocks, at least one of the brake blocks being movable back and forth in the longitudinal direction of the partition and it being possible to center the partition by means of the brake block in the form of a locking means (8, 9), it being possible to move at least one of the locking means (8, 9) into the partition (8) and far enough out of said partition that said locking means spans a clearance between the wall (3, 4) of the vehicle body and the lateral face edges of the partition to the lateral wall of the vehicle body, and the brake block which is moved out of the partition (7) being laterally delimited by flexible sealing elements (12.1, 12.2).

2. The vehicle body according to claim 1, **characterized in that** at least one of the brake blocks can be moved on the locking means (8, 9) toward a lateral wall (3, 4) and back in each case by means of a floating rod (10) engaged with a lever (11).

3. The vehicle body according to either claim 1 or claim 2, **characterized in that** the sealing elements (12.1, 12.2) are designed as sealing-lip elements and have a greater longitudinal extension than the clearance between the partition (7) and the wall (3, 4) of the vehicle body (1).

4. The vehicle body according to any of claims 1 to 3, **characterized in that** a locking means is provided on each lateral region of the partition (7).

## Revendications

1. Carrosserie de véhicule (1) pourvue d'un espace de chargement en forme de caisse, en particulier d'un espace de chargement pouvant être refroidie au moins en partie, comprenant au moins une paroi de séparation réglable (7) qui peut être bloquée, de manière coulissante longitudinalement à l'intérieur de l'espace de chargement, par un dispositif de verrouillage au niveau de parois latérales de montage avec interposition d'éléments d'étanchéité (12), les éléments d'étanchéité (12) s'étendant le long de bords latéraux de la paroi de séparation (7) et/ou de bords frontaux inférieur et supérieur de la paroi de séparation (7) et la paroi de séparation (7) pouvant être serre avec des parois (3, 4) de la carrosserie de véhicule (1) par le biais d'au moins un moyen de blocage (8, 9) s'étendant par endroits le long de la paroi de séparation (7) et limités par des éléments d'étanchéité (12), **caractérisé en ce que** des moyens de blocage (8, 9) réalisés sous la forme de mâchoires de freinage sont prévus au niveau de bords latéraux opposés de la paroi de séparation (7), au moins une des mâchoires de freinage étant mobile suivant un mouvement alternatif dans la direction longitudinale de la paroi de séparation et la paroi de séparation pouvant être centrée par les mâchoires de freinage servant de moyens de blocage (8, 9), au moins un des moyens de blocage (8, 9) pouvant être inséré dans la paroi de séparation (8) ou extrait de celle-ci jusqu'à recouvrir une fente ménagée entre la paroi (3, 4) de la carrosserie de véhicule et les bords frontaux latéraux de la paroi de séparation au niveau de la paroi latérale de la carrosserie de véhicule et jusqu'à ce que la mâchoire de frein, extraite de la paroi de séparation (7), soit limitée latéralement par des éléments d'étanchéité flexibles (12.1, 12.2).

2. Carrosserie de véhicule selon la revendication 1, **caractérisée en ce qu'**au moins une des mâchoires de frein au niveau du moyen de blocage (8, 9) doit être déplacé, à chaque fois par le biais d'une barre volante (10) s'engageant avec un levier (11), en direction d'une paroi latérale (3, 4) et inversement.

3. Carrosserie de véhicule selon la revendication 1 ou 2, **caractérisée en ce que** les éléments d'étanchéité (12.1, 12.2) sont conçus comme des éléments d'étanchéité à lèvres, et présentent une étendue longitudinale plus grande que la fente ménagée entre la paroi de séparation (7) et la paroi (3, 4) de la carrosserie de véhicule (1).

4. Carrosserie de véhicule selon l'une des revendications 1 à 3, **caractérisée en ce qu'**un moyen de blocage est prévu au niveau de chaque région latérale de la paroi de séparation (7).
